# FASCICULE DE BREVET EUROPEEN

(11) **EP 1 688 588 B1**
(45) Date de publication et mention de la délivrance du brevet: **19.12.2007**
(21) Numéro de dépôt: 05292746.4
(22) Date de dépôt: 20.12.2005
(51) Int. Cl.: F01D 9/04, F23R 3/04

(54) **Diffuseur pour chambre annulaire de combustion, ainsi que chambre de combustion et turbopropulseur comprenant un tel diffuseur**
Diffusor für Ringbrennkammer, sowie Brennkammer und Turboprop mit einem solchen Diffusor
Diffusor for an annular combustor, as well as combustor and turboprop with such a diffusor

(30) Priorité: 06.01.2005 FR 0500098
(43) Date de publication de la demande: 09.08.2006
(73) Titulaire: SNECMA, 75015 Paris (FR)
(72) Inventeur: Cayre, Alain, 77830 Pamfou (FR); Daguenet, Luc, 91100 Corbeil (FR); Gautier, Claude, 77176 Savigny le Temple (FR); Pieussergues, Christophe, 77370 Nangis (FR); Touchaud, Stéphane, 94300 Vincennes (FR)
(74) Mandataire: Ramey, Daniel

(56) Documents cités:
- GB-A- 589 030
- US-A- 5 211 003

## Description

L'invention concerne un diffuseur pour une chambre annulaire de combustion, en particulier pour un moteur d'avion tel qu'un turboréacteur ou un turbopropulseur, ce diffuseur comprenant un séparateur permettant de partager le flux d'air sortant d'un compresseur en deux veines annulaires de diffusion alimentant la chambre de combustion.

On connaît déjà un diffuseur de ce type pour l'alimentation d'une chambre de combustion à double tête, c'est-à-dire comportant deux ensembles annulaires concentriques d'injecteurs de carburant. Le séparateur comporte deux surfaces de révolution qui divergent vers l'aval depuis l'entrée du diffuseur. Cette structure est à configuration très ouverte et est destinée à des moteurs de grande taille. Elle ne convient pas pour l'alimentation d'une chambre de combustion à simple tête, en particulier pour un moteur de dimension relativement réduite.

On connaît également un diffuseur comportant deux séparateurs coaxiaux agencés l'un autour de l'autre, pour partager le flux d'air sortant du compresseur en trois veines annulaires co-axiales, dont celle du milieu alimente la chambre de combustion et celles situées radialement à l'intérieur et radialement à l'extérieur alimentent des circuits de contournement de la chambre de combustion, pour le refroidissement des parois de celle-ci et d'une turbine agencée en sortie de la chambre de combustion. Ce diffuseur connu est conçu pour un moteur de grande dimension et ne peut être utilisé dans un moteur de dimension relativement plus faible. GB 589030 montre un diffuseur de turbopropulseur

La présente invention a pour objet un diffuseur à séparateur, qui soit compact pour être utilisable dans un moteur de dimension relativement plus faible que dans la technique antérieure, et qui permette de diviser de façon optimale le flux d'air sortant du compresseur en deux veines de diffusion alimentant une chambre de combustion à simple tête, en minimisant les pertes de charges, en optimisant la répartition des débits d'alimentation et de refroidissement de la chambre, et en minimisant les perturbations causées par un éventuel prélèvement d'air avion au fond de la chambre de combustion. L'invention est définie par la revendication 1.

Elle propose, à cet effet, un diffuseur pour chambre annulaire de combustion à simple tête, en particulier pour un turbopropulseur d'avion, comprenant un séparateur partageant le flux d'air sortant d'un compresseur en deux veines annulaires de diffusion, ce séparateur étant formé d'une tôle mince reliée par des bras structuraux à des parois de révolution interne et externe du diffuseur, l'ouverture de chaque veine de diffusion délimitée par ladite tôle mince dans le diffuseur étant d'environ 12-13°, caractérisé en ce que les injecteurs de carburant dans la chambre de combustion sont dans le prolongement de la partie d'extrémité aval de la tôle mince formant le séparateur et sont orientés par rapport à l'axe longitudinal de la chambre sensiblement comme cette partie d'extrémité aval.

Le diffuseur selon l'invention a pour avantage essentiel de permettre un ralentissement maximal du flux d'air sortant du compresseur sur une courte distance, tout en garantissant un écoulement sain et stable, c'est-à-dire sans décollement. L'ouverture doublée de ce diffuseur permet une réduction de la longueur du diffuseur et un gain de masse pour le moteur.

La veine externe de diffusion alimente une partie du système d'injection de carburant de la chambre de combustion, ainsi qu'un circuit de contournement externe de la chambre de combustion et éventuellement un circuit de prélèvement d'air pour les besoins de l'avion, et la veine interne de diffusion alimente une partie du système d'injection de carburant dans la chambre de combustion et un circuit de contournement interne de la chambre de combustion.

De préférence, la tôle mince a une forme profilée en section longitudinale, pour réduire les turbulences et sillages néfastes en aval et pour améliorer l'alimentation du fond de chambre.

Les bras structuraux qui relient la tôle mince formant séparateur aux parois de révolution interne et externe du diffuseur peuvent avoir une fonction de redressement de l'écoulement sortant du compresseur.

Ces bras structuraux peuvent également être profilés en section longitudinale, pour réduire les pertes de charge du diffuseur.

Des redresseurs peuvent être agencés entre la sortie du compresseur et l'entrée du diffuseur et éventuellement être formés dans un prolongement vers l'amont des parois de révolution du diffuseur.

De préférence, le diffuseur selon l'invention est du type éclaté et comporte un décrochement situé radialement entre l'extrémité aval de la paroi interne de révolution du diffuseur et un carter interne de liaison, et/ou un décrochement situé radialement entre l'extrémité aval de la paroi externe de révolution du diffuseur et un carter externe de liaison, ces décrochements formant des zones de recirculation stable d'air, ce qui a pour effet de rendre le diffuseur moins sensible aux hétérogénéités du débit d'air sortant du compresseur.

De façon générale, la faible longueur du diffuseur selon l'invention associée à sa diffusion importante permet une bonne alimentation d'une chambre de combustion à simple tête dans un moteur ayant des dimensions plus faibles que dans la technique antérieure, le diffuseur est capable de supporter des conditions aérodynamiques d'entrée hétérogènes sur la hauteur de veine, il est capable de limiter les perturbations causées par un prélèvement d'air avion au fond de la chambre, et il garantit des pertes de charge de chambre faibles et donc un meilleur rendement et une moindre consommation en carburant du moteur.

L'invention concerne également une chambre de combustion à simple tête, en particulier pour un turbopropulseur d'avion, caractérisée en ce qu'elle comprend un diffuseur tel que décrit ci-dessus.

L'invention concerne enfin un turbopropulseur d'avion, caractérisé en ce qu'il comprend un diffuseur tel que décrit ci-dessus.

L'invention sera mieux comprise et d'autres caractéristiques, détails et avantages de celles-ci apparaîtront plus clairement à la lecture de la description qui suit, faite à titre d'exemple non limitatif en référence aux dessins annexés dans lesquels :
- la figure 1 est une demi-vue schématique partielle en coupe axiale d'un diffuseur selon l'invention et d'une chambre de combustion à simple tête ;
- les figures 2 à 4 sont des demi-vues schématiques partielles en coupe axiale de variantes de réalisation du diffuseur selon l'invention.

Sur les dessins, ce qui se trouve à gauche est en amont ou à l'avant et ce qui se trouve à droite est en aval ou en arrière.

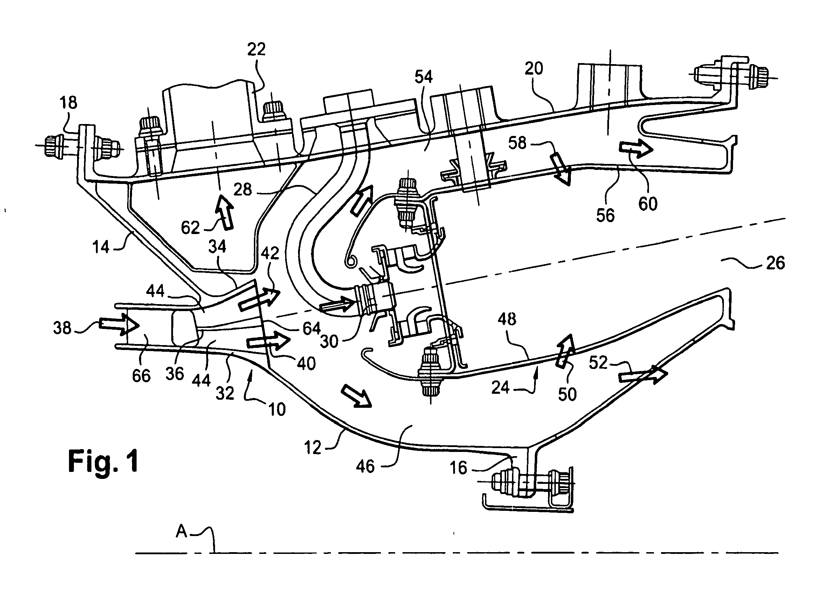

En figure 1, le diffuseur 10 selon l'invention est agencé en sortie d'un compresseur, non représenté, et est supporté par une paroi interne 12 et une paroi externe 14 fixées par des brides 16, 18 respectivement sur un carter interne de turbine et sur un carter externe 20 qui comporte au moins un conduit 22 de prélèvement d'air avion (air de pressurisation de la cabine, de dégivrage de la nacelle, etc.) qui débouche en amont d'une chambre de combustion 24 de forme annulaire alimentée en air par le diffuseur 10 et alimentant elle-même une turbine haute-pression, non représentée, agencée en aval de la sortie 26 de la chambre de combustion.

Le carter externe 20 porte également des conduits 28 d'alimentation en carburant d'injecteurs 30 répartis sur une circonférence autour de l'axe longitudinal A de la chambre de combustion 24 et du moteur.

Le diffuseur 10 comprend une paroi de révolution interne 32 entourée par une paroi de révolution externe 34, et une tôle mince 36 formant séparateur, qui s'étend autour de l'axe longitudinal A du moteur entre les parois 32 et 34 et qui partage le flux d'air 38 sortant du compresseur en deux veines annulaires interne 40 et externe 42. Des bras structuraux 44 s'étendent radialement entre la tôle mince 36 et les parois de révolution 32 et 34 pour le maintien de la tôle mince 36 et la transmission des efforts dans le diffuseur.

Les injecteurs 30 de carburant de la chambre de combustion sont dans le prolongement de l'extrémité aval de la tôle mince 36 et ont la même orientation que cette extrémité aval par rapport à l'axe longitudinal A du moteur.

Les deux veines interne et externe formées entre la tôle mince 36 et les parois interne 32 et externe 34 de révolution du diffuseur ont des angles d'ouverture assurant une augmentation croissante de la section de passage de l'air de l'entrée à la sortie du diffuseur, l'ouverture totale du diffuseur 10 représentant le double de l'ouverture optimale d'un diffuseur simple sans séparateur, ce qui permet d'assurer une diffusion optimale du flux d'air sortant du compresseur, sur une longueur axiale plus courte.

La veine radialement interne 40 sortant du diffuseur 10 alimente le système d'injection formé par les injecteurs 30 dans la chambre de combustion et un canal annulaire interne 46 de contournement de la chambre de combustion 24, ce canal interne étant formé entre la paroi interne 12 de support du diffuseur 10 et une paroi annulaire correspondante 48 de la chambre de combustion 24 et débouchant en aval vers un circuit interne de refroidissement de la turbine. La partie de la veine de diffusion 40 qui passe dans ce canal 46 se partage en un débit 50 qui pénètre dans la chambre 24 par des orifices de la paroi annulaire interne 48 et en un débit 52 dirigé vers le circuit de refroidissement interne de la turbine.

La veine de diffusion radialement externe 42 alimente pour partie le système d'injection de la chambre de combustion 24 et pour partie un canal annulaire 54 de contournement externe de la chambre de combustion 24, ce canal 54 étant formé entre le carter externe 20 et une paroi annulaire externe 56 de la chambre de combustion. L'air circulant dans le canal 54 se partage en un débit 58 pénétrant dans la chambre 24 par des orifices de la paroi annulaire externe 56 et en un débit 60 alimentant un circuit de refroidissement externe de la turbine.

Lorsque le circuit de prélèvement d'air avion est activé, le conduit de prélèvement 22 est alimenté par une partie 62 de la veine externe 42 sortant du diffuseur.

Dans le mode de réalisation de la figure 1, la tôle annulaire mince 36 formant séparateur s'étend vers l'amont sensiblement jusqu'au niveau du bord amont des bras structuraux 44 et vers l'aval sensiblement jusqu'au bord aval des bras structuraux 44 et des parois de révolution 32 et 34 du diffuseur, en se terminant par un culot droit 64.

Les parois de révolution 32 et 34 des diffuseurs sont prolongées vers l'amont au-delà de la tôle annulaire 34 et des bras structuraux 44 et sont reliées par des cloisons sensiblement radiales 66 de redressement du flux d'air 38 sortant du dernier étage du compresseur.

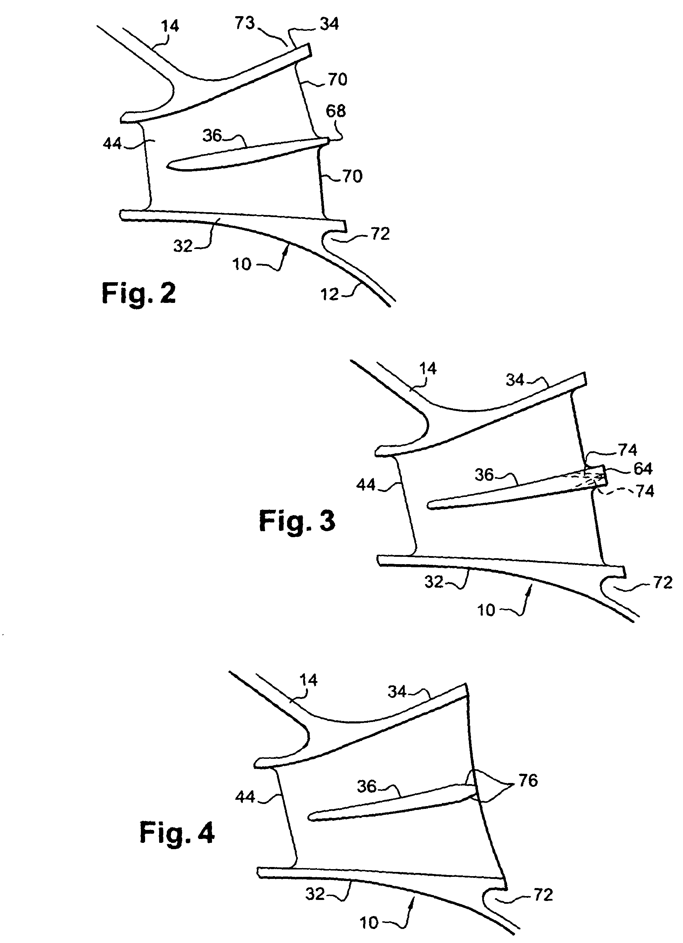

Dans la variante de réalisation de la figure 2, les parois de révolution 32 et 34 du diffuseur 10 sont en aval de redresseurs non représentés et l'extrémité amont de la tôle 36 est décalée vers l'aval par rapport aux extrémités amont des parois 32 et 34 et des bords amont des bras structuraux 44. La tôle annulaire 36 est profilée pour limiter les turbulences et les sillages derrière son extrémité aval qui forme un bord de fuite 68 relativement mince. Les bords arrière 70 des bras structuraux 44 sont légèrement en amont des bords arrière des parois de révolution 32 et 34 et du bord de fuite 68 de la tôle annulaire 36, ou sensiblement dans le même plan que ces bords arrière.

Le diffuseur 10 de la figure 2 est du type éclaté et comporte un premier décrochement 72 à l'extrémité aval de la paroi de révolution interne 32, entre celle-ci et la paroi interne 12 de fixation du diffuseur, et un second décrochement 73 à l'extrémité aval de la paroi de révolution externe 34, entre celle-ci et la paroi externe 14 de fixation du diffuseur.

Ces décrochements 72 et 73 permettent de ménager des zones de recirculation stable entre les parois interne 32 et externe 34, et les parois des carters interne 12 et externe 14, respectivement, pour améliorer l'insensibilité aux variations de pression, de température et de vitesse sur la hauteur de la veine à l'entrée du diffuseur.

Les bras structuraux 44 peuvent eux-mêmes être profilés pour limiter les pertes de charge dans le diffuseur. Ils peuvent également former des redresseurs du flux d'air 38 sortant du dernier étage du compresseur.

Dans le mode de réalisation de la figure 3, le diffuseur 10 est sensiblement du même type que celui de la figure 2, mais la tôle annulaire mince 36 formant le séparateur n'est pas profilée et se termine à son extrémité aval par un culot droit 64 dans lequel peuvent être ménagés des perçages 74 orientés vers l'amont et débouchant sur une face et sur l'autre alternativement de la tôle mince 36.

Le culot droit 64 génère une zone d'écoulement « mort » ou de recirculation avec un « déficit » de pression. Il est également à l'origine de pertes de pression.

Les perçages 74 permettent d'égaliser les pressions sur les faces intrados et extrados du séparateur 36 et sur le culot 64, ce qui limite les effets néfastes précités du culot et met l'écoulement derrière le culot en pression.

Les perçages sont réalisés sur la périphérie arrière du séparateur 36 selon un pas circonférentiel déterminé. Le nombre et les dimensions de ces perçages sont déterminés de manière à respecter les contraintes de fabrication du séparateur.

Dans le mode de réalisation de la figure 4, le diffuseur 10 est sensiblement du même type que celui de la figure 3, mais la tôle annulaire mince 36 formant le séparateur se termine à son extrémité aval par un culot droit à bords chanfreinés 76 sur sa périphérie, de façon à limiter la zone de recirculation d'air derrière le culot et à favoriser l'éclatement des veines de diffusion 40 et 42 pour les recoller plus rapidement derrière le culot.

Les caractéristiques du séparateur formé par la tôle annulaire mince 36 permettent de garantir une plus grande robustesse, c'est-à-dire un écoulement sans décollement ni recirculation, vis-à-vis des hétérogénéités du flux d'air 38 sortant du compresseur, un bon équilibre aérodynamique entre les deux veines 40 et 42 sortant du diffuseur et des écoulements de contournement de chambre de combustion qui sont moins sensibles aux hétérogénéité du flux d'air 38. Les performances de la chambre de combustion en sont améliorées d'autant. Le séparateur permet également de protéger la veine interne 40 en cas de prélèvement d'air avion.

## Revendications

1. Diffuseur pour chambre annulaire de combustion à simple tête, en particulier pour un turbopropulseur d'avion, comprenant un séparateur (36) partageant le flux d'air (38) sortant d'un compresseur en deux veines annulaires (40, 42) de diffusion, ce séparateur étant formé d'une tôle mince (36) reliée par des bras structuraux (44) à des parois de révolution interne (32) et externe (34) du diffuseur, l'ouverture de chaque veine de diffusion délimitée par ladite tôle mince (36) dans le diffuseur étant d'environ 12-13°, **caractérisé en ce que** les injecteurs de carburant (30) dans la chambre de combustion (24) sont dans le prolongement de la partie d'extrémité aval de la tôle mince (36) formant le séparateur et sont orientés par rapport à l'axe longitudinal (A) de la chambre (24) sensiblement comme cette partie d'extrémité aval.

2. Diffuseur selon la revendication 1, **caractérisé en ce que** la veine externe de diffusion (42) alimente le système d'injection de carburant de la chambre de combustion (24), un circuit (54) de contournement externe de la chambre de combustion et éventuellement un circuit (22) de prélèvement d'air pour les besoins de l'avion.

3. Diffuseur selon la revendication 1 ou 2, **caractérisé en ce que** la veine interne de diffusion (40) alimente le système d'injection de carburant de la chambre de combustion et un circuit (46) de contournement interne de cette chambre.

4. Diffuseur selon l'une des revendications précédentes, **caractérisé en ce que** la tôle mince (36) a une forme profilée en section longitudinale.

5. Diffuseur selon l'une des revendications 1 à 3, **caractérisé en ce que** la tôle mince (36) comporte un culot (64) à son extrémité aval, dans lequel sont formés des perçages (74) s'étendant vers l'amont et débouchant sur l'une et l'autre face alternativement de la tôle mince, pour l'équilibrage des pressions de part et d'autre du séparateur et au niveau du culot (64).

6. Diffuseur selon la revendication 1 à 3 et 5, **caractérisé en ce que** la tôle mince (36) comporte un culot droit à bords chanfreinés (76) à sa périphérie aval pour favoriser l'éclatement des veines de diffusion (40, 42).

7. Diffuseur selon l'une des revendications précédentes, **caractérisé en ce que** les bras structuraux (44) forment des redresseurs du flux d'air (38) sortant du compresseur.

8. Diffuseur selon l'une des revendications 1 à 6, **caractérisé en ce que** des redresseurs (66) sont agencés entre la sortie du compresseur et l'entrée du diffuseur (10), par exemple entre des prolongements amont des parois de révolution interne et externe du diffuseur.

9. Diffuseur selon l'une des revendications précédentes, **caractérisé en ce que** les bras structuraux (44) sont profilés, pour réduire les pertes de charge du diffuseur.

10. Diffuseur selon l'une des revendications précédentes, **caractérisé en ce qu**'il est du type éclaté et comporte un décrochement (72) situé entre l'extrémité aval de la paroi de révolution interne (32) du diffuseur et une paroi interne (12) de support, et/ou un décrochement (73) situé entre l'extrémité aval de la paroi de révolution externe (34) du diffuseur et une paroi externe (14) de support, ces décrochements formant des zones de recirculation stable de l'air en sortie du diffuseur.

11. Chambre de combustion à simple tête, en particulier pour un turbopropulseur d'avion, **caractérisée en ce qu**'elle comprend un diffuseur selon l'une des revendications précédentes.

12. Turbopropulseur d'avion, **caractérisé en ce qu'**il comprend un diffuseur selon l'une des revendications 1 à 10.

## Claims

1. A diffuser for a single-head annular combustion chamber, in particular for an airplane turboprop, the diffuser comprising a separator (36) splitting the flow of air (38) leaving a compressor into two annular diffuser streams (40, 42), the separator being formed by a thin sheet (36) connected by structural arms (44) to inner and outer circularly-symmetrical walls (32, 34) of the diffuser, the diffuser angle of each diffusion stream defined by said thin sheet (36) in the diffuser being about 12° to 13°, the diffuser being **characterized in that** the fuel injectors (30) in the combustion chamber (24) are in line with the downstream end portion of the thin sheet (36) forming the separator and are oriented relative to the longitudinal axis (A) of the combustion chamber (24) substantially in the same manner as said downstream end portion.

2. A diffuser according to claim 1, **characterized in that** the outer diffusion stream (42) feeds the fuel injection system of the combustion chamber (24), a bypass circuit (54) for bypassing the combustion chamber on the outside of the combustion chamber, and optionally a circuit (22) taking off air for the needs of the airplane.

3. A diffuser according to claim 1 or claim 2, **characterized in that** the inner diffusion stream (40) feeds the fuel injection system of the combustion chamber and a circuit (46) for bypassing said chamber on the inside.

4. A diffuser according to any preceding claim, **characterized in that** the thin sheet (36) is of streamlined shape in longitudinal section.

5. A diffuser according to any one of claims 1 to 3, **characterized in that** the thin sheet (36) includes a tip (64) at its downstream end, having holes (64) formed therein and extending upstream to open out alternately in each of the faces of the thin sheet in order to balance pressures on either side of the separator and at the tip (64).

6. A diffuser according to any one of claims 1 to 3 and 5, **characterized in that** the thin sheet (36) includes a straight tip with chambered edges (76) at its downstream end in order to encourage the diffusion streams (40, 42) to split.

7. A diffuser according to any preceding claim, **characterized in that** the structural arms (44) form straighteners for straightening out the air flow (38) leaving the compressor.

8. A diffuser according to any one of claims 1 to 6, **characterized in that** straighteners (66) are arranged between the outlet from the compressor and the inlet to the diffuser (10), e.g. between upstream extensions of the inner and outer circularly-symmetrical walls of the diffuser.

9. A diffuser according to any preceding claim, **characterized in that** the structural arms (44) are streamlined in order to reduce head losses in the diffuser.

10. A diffuser according to any preceding claim, **characterized in that** it includes a setback (72) situated between the downstream end of the inner circularly-symmetrical wall (32) of the diffuser and an inner support wall (12), and/or a setback (73) situated between the downstream end of the outer circularly-symmetrical wall (34) of the diffuser and an outer support wall (14), said setbacks forming stable air recirculation zones at the outlet from the diffuser.

11. A single-head combustion chamber, in particular for an airplane turboprop, the combustion chamber being **characterized in that** it includes a diffuser according to any preceding claim.

12. An airplane turboprop, **characterized in that** it includes a diffuser according to any one of claims 1 to 10.

## Patentansprüche

1. Diffusor für Ringbrennkammern mit einfachem Kopf, insbesondere für einen Turboprop-Antrieb eines Flugzeugs, welcher einen Trenner (36) aufweist, der den von einem Verdichter kommenden Luftstrom (38) in zwei ringförmige Diffusionsbahnen (40, 42) teilt, wobei dieser Trenner von einem dünnen Blech (36) gebildet wird, das durch Tragarme (44) mit einer umlaufenden Innenwand (32) und Außenwand (34) des Diffusors verbunden ist, wobei die Öffnung jeder Diffusionsbahn durch dieses dünne Blech (36) umgrenzt ist und ca. 12 - 13 ° beträgt,
**dadurch gekennzeichnet,**
**dass** die Brennstoffeinspritzdüsen (30) in die Brennkammer (24) sich in der Verlängerung des hinteren Endabschnitts des dünnen Blechs (36) befinden, das den Trenner bildet, und zur Längsachse (A) der Kammer (24) im Wesentlichen wie dieser hintere Endabschnitt ausgerichtet sind.

2. Diffusor nach Anspruch 1,
**dadurch gekennzeichnet,**
**dass** die äußere Diffusionsbahn (42) das Brennstoffeinspritzsystem der Brennkammer (24), einen äußeren Umgehungskreis (54) der Brennkammer und eventuell einen Kreis (22) zur Luftentnahme für den Bedarf des Flugzeugs speist.

3. Diffusor nach Anspruch 1 oder 2,
**dadurch gekennzeichnet,**
**dass** die innere Diffusionsbahn (40) das Brennstoffeinspritzsystem der Brennkammer und einen inneren Umgehungskreis (46) dieser Brennkammer speist.

4. Diffusor nach einem der vorherigen Ansprüche,
**dadurch gekennzeichnet,**
**dass** das dünne Blech (36) im Längsschnitt eine Profilform hat.

5. Diffusor nach einem der Ansprüche 1 bis 3,
**dadurch gekennzeichnet,**
**dass** das dünne Blech (36) an seinem hinteren Ende einen Sockel (64) aufweist, in dem Bohrungen (74) ausgeführt sind, die nach vom verlaufen und zum Ausgleichen der Drücke beiderseits des Trenners und im Bereich des Sockels (64) abwechselnd auf der einen und der anderen Seite des dünnen Blechs (36) münden.

6. Diffusor nach Anspruch 1 bis 3 und 5,
**dadurch gekennzeichnet,**
**dass** das dünne Blech (36) an seinem hinteren Außenrand einen geraden Sockel mit abgeschrägten Rändern (76) aufweist, um das Auseinanderströmen der Diffusionsbahnen (40, 42) zu unterstützen.

7. Diffusor nach einem der vorherigen Ansprüche,
**dadurch gekennzeichnet,**
**dass** die Tragarme (44) Geraderichter für den aus dem Verdichter austretenden Luftstrom (38) bilden.

8. Diffusor nach einem der Ansprüche 1 bis 6,
**dadurch gekennzeichnet,**
**dass** Geraderichter (66) zwischen dem Austritt des Verdichters und dem Eintritt des Diffusors(10) angebracht sind, beispielsweise zwischen vorderen Verlängerungen der umlaufenden Innenwand und Außenwand des Diffusors.

9. Diffusor nach einem der vorherigen Ansprüche,
**dadurch gekennzeichnet,**
**dass** die Tragarme (44) Profile aufweisen, um die Druckverluste des Diffusors zu verringern.

10. Diffusor nach einem der vorherigen Ansprüche,
**dadurch gekennzeichnet,**
**dass** es sich um einen auseinanderführenden Diffusor handelt, der einen Rücksprung (72) aufweist, der sich zwischen dem hinteren Ende der umlaufenden Innenwand (32) des Diffusors und einer inneren Tragwand (12) befindet, und/oder einen Rücksprung (73) aufweist, der sich zwischen dem hinteren Ende der umlaufenden Außenwand (34) des Diffusors und einer äußeren Tragwand (14) befindet, wobei diese Rücksprünge stabile Rezirkulationsbereiche der aus dem Diffusor austretenden Luft bilden.

11. Brennkammer mit einfachem Kopf, insbesondere für einen Turboprop-Antrieb eines Flugzeugs,
**dadurch gekennzeichnet,**
**dass** sie einen Diffusor nach einem der vorherigen Ansprüche aufweist.

12. Turboprop-Antrieb eines Flugzeugs,
**dadurch gekennzeichnet,**
**dass** er einen Diffusor nach einem der Ansprüche 1 bis 10 aufweist.
